# EUROPÄISCHE PATENTSCHRIFT

(11) **EP 0 771 956 B1**
(45) Veröffentlichungstag und Bekanntmachung des Hinweises auf die Patenterteilung: **21.06.2000**
(21) Anmeldenummer: 96116127.0
(22) Anmeldetag: 09.10.1996
(51) Int. Cl.: F16C 17/22

(54) **Gleitlagerung für eine Maschinenwelle**
Slide bearing for an engine-shaft
Palier à glissement pour un arbre-machine

(30) Priorität: 06.11.1995 DE 19541247
(43) Veröffentlichungstag der Anmeldung: 07.05.1997
(73) Patentinhaber: KSB Aktiengesellschaft, 67227 Frankenthal (DE)
(72) Erfinder: Graf, Ernst, 91275 Auerbach (DE); Radke, Michael, Dr., 14089 Berlin (DE)

(56) Entgegenhaltungen:
- EP-A- 0 264 661
- EP-A- 0 563 437
- CH-A- 383 084
- DE-A- 2 000 601
- DE-U- 8 915 546
- US-A- 4 560 014

## Beschreibung

Die Erfindung betrifft eine Gleitlagerung für eine Maschinenwelle gemäß den Oberbegriff des Anspruchs 1.

Aufgrund des Konstruktionsprinzips von Magnetkupplungspumpen, bei dem der Rotor im allgemeinen vollständig vom Fördermedium umgeben ist, ist der Einsatz von Gleitlagerungen bei dieser hermetischen Pumpenbauart erforderlich. Bedingt durch die vielfältigen Anwendungsfälle von Magnetkupplungspumpen in der Industrie- und Verfahrenstechnik, kommt sowohl der Werkstoffauswahl für die Lagerbuchsen und -hülsen als auch der Befestigung dieser Bauteile eine grundlegende Bedeutung für eine hohe Betriebssicherheit zu. Die Werkstoffauswahl erfolgt hauptsächlich im Hinblick auf günstige Gleiteigenschaften, hohe Verschleißfestigkeit, gute Korrosionsbeständigkeit und gute Trockenlaufeigenschaften.

Die sich hier als geeignet anbietenden Werkstoffe, vornehmlich Keramikwerkstoffe, besitzen allerdings im Vergleich zu Stahl wesentlich niedrigere Ausdehnungskoeffizienten. Dies führt in der Praxis zu schwer lösbaren Problemen bei der Befestigung der rotierenden Lagerhülsen auf der Welle, vor allem dann, wenn der Rotor der Magnetkupplungspumpe Betriebstemperaturen von mehr als 150 °C ausgesetzt wird. Bei den häufig im Pumpenbau eingesetzten Metall-Keramik-Verbindungen mit einem Verhältnis der Ausdehnungskoeffizienten von 4:1 ergeben sich bei einer Erhöhung der Betriebstemperatur um ca. 200 °C Dehnungsdifferenzen von mehr als 1/10 mm. Eine auch bei hohen Betriebstemperaturen sichere, allein als Preßverbindung ausgelegte kraftschlüssige Metall-Keramik-Verbindung würde eine Auslegung mit großen Übermaßen bei Raumtemperatur erfordern. Eine solche Preßverbindung würde aber im Normalfall die zulässige elastische Verformungsgrenze aller verwendbaren Stähle überschreiten.

Für die Befestigung der rotierenden Lagerhülsen auf der Rotorwelle sind konkurrierende Anforderungen zu erfüllen: Einerseits ist ein einwandfreier und dauerhafter Kraftschluß zwischen der Lagerhülse und der Welle sowie ein konstantes Spiel zwischen der Lagerhülse und der Lagerbuchse sicherzustellen, andererseits soll ein einfacher Austausch der Lagerhülsen ohne aufwendige Vorrichtungen möglich sein. Die gleiche Problemstellung ergibt sich hinsichtlich der Befestigung der Lagerbuchse im Gehäuse. Die Entwicklung von geeigneten konstruktiven Lösungsprinzipien für den Einsatz in Magnetkupplungspumpen wird insbesondere durch die sehr kompakte Bauweise dieser Pumpen und die sich hieraus ergebenden stark eingeengten Platzverhältnisse im Bereich der Gleitlagerung erschwert.

Aus der EP 0 563 437 A2 ist eine Gleitlagerung der eingangs genannten Art bekannt. Die dort verwendete einteilige, mit radialem Spiel zur Welle angeordnete Lagerhülse weist eine im Vergleich zu den Lagerbuchsen relativ große axiale Länge auf. Die Herstellung einer solchen Lagerhülse ist aufwendig und teuer. Die Zentrierung der Lagerhülse erfolgt an deren Enden durch Axiallagerringe, die eine Doppelfunktion erfüllen: neben der konzentrischen Lagerung der Lagerhülse an ihrem Innenumfang bilden die jeweils in einer Halterung eingeschrumpften Axiallagerringe Gleitflächen mit den nach außen gewandten Stirnseiten der beiden im Gehäuse angeordneten Lagerbuchsen. Die Lagerhülse und die Axiallagerringe sind aus Materialien mit dem gleichen Ausdehnungskoeffizienten hergestellt, so daß auch hohe Betriebstemperaturen nicht zu einem Verlust der Zentrierung und der kraftschlüssigen Verbindung am Übergangsbereich zwischen diesen Teilen führen. Da aber die Halterungen der Axiallagerringe und die Welle notwendigerweise aus Metall, insbesondere Stahl, hergestellt sind, ergibt sich bei einer Verwendung von Keramikmaterialien für die Lagerbuchsen, die Lagerhülse und die Axiallagerringe an den Übergängen zwischen Metall- und Keramikteilen bei hohen Betriebstemperaturen ein Verlust der kraftschlüssigen Verbindung und der eindeutigen Zentrierung zwischen diesen Bauteilen, also auch ein Verlust der kraftschlüssigen Verbindung und Zentrierung der Lagerhülse. Außerdem hat die im Vergleich zur Lagerhülse wesentlich größere Ausdehnung der Welle in axialer Richtung einen Verlust der axialen Zentrierung der Lagerhülse zur Folge.

Aus der Patentliteratur sind weitere Konstruktionsprinzipien zum Ausgleich unterschiedlicher Ausdehnungen von Bauteilen und zur Befestigung von Gleitlagerhülsen bekannt:

In der DE 20 00 601 A1 wird eine Lagerhülse gelehrt, deren Seitenflächen als radial nach innen weisender Konus ausgeführt sind. Eine solche Ausführung der Lagerhülse erweist sich hinsichtlich der Festigkeit als sehr ungünstig, da die für Lagerhülsen verwendeten keramischen Werkstoffe nur geringe Zugspannungen zulassen. Weil diese Gleitlagerung aber über keinen Dehnungsausgleich verfügt, können unzulässig hohe Zugspannungen in der Lagerhülse durch eine Ausdehnung der Halteringe nicht ausgeschlossen werden.

Aus der EP 0 264 661 A2 ist eine Gleitlagerung bekannt, bei der das Problem der unterschiedlichen Wärmeausdehnung einer Welle und einer darauf angeordneten Lagerhülse mit Dehnungsausgleichselementen gelöst wird. Die ohne radiales Spiel auf der Welle angeordnete und dort mittels Halteringen befestigte Lagerhülse ist durch Längsteilung in mehrere Segmente aufgegliedert. Zwischen den einzelnen Segmenten sowie zwischen den Enden der Lagerhülse und den Lagerringen sind jeweils aus Memory-Metall bestehende Dehnungsausgleichselemente vorgesehen. Eine solche Gestaltung ist sehr aufwendig, und sie ist wegen der Einhaltung der erforderlichen engen Toleranzen fertigungstechnisch schwer realisierbar. Außerdem steht die Aufgliederung in viele Einzelelemente der Forderung nach einer einfachen Montage entgegen. Entscheidend ist aber der Umstand, daß die für Memory-Metalle verwendeten Legierungen eine stark eingeschränkte Korrosionsbeständigkeit besitzen, und daher für den Einsatz in einer Magnetkupplungspumpe ungeeignet sind.

Der Erfindung liegt die Aufgabe zugrunde, eine insbesondere in Magnetkupplungspumpen einsetzbare Gleitlagerung zu schaffen, die trotz des geringen zur Verfügung stehenden Platzes leicht zu montieren und demontieren ist und die über einen großen Temperaturbereich eine hohe Betriebssicherheit gewährleistet.

Ausgehend von einer Gleitlagerung der eingangs genannten Art, wird diese Aufgabe erfindungsgemäß gelöst durch. Die Merkmale des Kennzeichnungsteils von Anspruch 1.

Die Aufteilung der für Magnetkupplungspumpen notwendigerweise langen Radiallagerung auf zwei in einem Verbund angeordnete Lagerhülsen bringt den Vorteil einer einfacheren und billigeren Fertigung der Lagerhülsen mit sich. Der zwischen den Lagerhülsen und den übrigen auf der Welle angeordneten Teilen der Gleitlagerung gegebene Verbund paßt sich wegen der ihm verliehenen Nachgiebigkeit stetig an jede Veränderung der Längenverhältnisse zwischen den miteinander verbundenen Teilen an. Daher werden die aus Keramik bestehenden Teile, also auch die Lagerhülsen, Zugbelastung unterworfen. Über die Konusflächen an den Lagerhülsen und den Halteringen wird eine über einen weiten Temperaturbereich präzise radiale Zentrierung der Lagerhülsen gewährleistet, so daß stets ein konstantes Spiel zwischen Lagerhülsen und -buchsen vorliegt. Die Halteringe üben dabei stets eine reine Druckbeanspruchung auf die Lagerhülsen aus.

Die Unteransprüche nennen vorteilhafte Ausgestaltungen der Erfindung:

Eine für eine einwandfreie Funktion der erfindungsgemäßen Gleitlagerung optimale Ausführung wird erzielt, wenn der zur Wellenachse gebildete Winkel einer Konusfläche zwischen 30 ° und 60 ° beträgt.

Eine Vereinfachung ergibt sich, wenn zwischen den beiden Lagerhülsen nicht zwei einzelne, miteinander verbundene Halteringe, sondern ein zentraler, beide zu den Konusflächen komplementären Flächen besitzender Haltering angeordnet ist.

Für Gleitlagerungen, die Betriebstemperaturen von über 150°C ausgesetzt werden, wird vorgeschlagen, daß die Lagerbuchsen und die Axiallagerringe durch radial angeordnete Federelemente fixiert werden. Hierdurch läßt sich eine Anpassung der Lagerbuchsen und der Axiallagerringe an Dehnungen des die Gleitlagerung aufnehmenden Gehäuses erreichen.

Eine vor allem bei sehr hohen Temperaturen vorteilhafte Anpassung der Gleitlagerung an die Gehäusedehnungen ergibt sich dadurch, daß die Lagerbuchsen im Gehäuse verschiebbar angeordnet sind und an jeder der beiden Stirnseiten eine radial nach außen gerichtete Konusfläche aufweisen, daß die Lagerbuchsen an den jeweils äußeren Konusflächen durch das Gehäuse oder ein mit dem Gehäuse fest verbundenes Teil und an den jeweils inneren Konusflächen durch Halteringe mit zu den Konusflächen komplementären Flächen radial und axial zentriert werden, und daß zwischen den Halteringen ein in axialer Richtung wirkendes Federelement angeordnet ist.

Als vorteilhaft vor allem für die Gleitlagerung einer Magnetkupplungspumpe erweist sich, wenn in jedem Haltering eine oder mehrere Bohrungen angeordnet sind, welche eine Verbindung herstellen zwischen dem mit Fluid gefüllten Raum im Bereich der Gleitlagerflächen und einer am inneren Radius des Halteringes umlaufenden Nut, die ihrerseits eine oder mehrere in der Welle angeordnete Bohrungen umschließt, welche in eine zum Ende der Welle führende Axialbohrung münden.

Im übrigen wird noch vorgeschlagen, daß als Federelement eine oder/eine Anordnung von mehreren Tellerfedern eingesetzt wird. In der überwiegenden Zahl der Anwendungsfälle dürfte es zweckmäßig sein, wenn die Lagerbuchsen, die Lagerhülsen und die Axiallagerringe aus keramischen Werkstoffen, vorzugsweise aus Siliziumcarbid, bestehen. Es sind aber auch Anwendungsfälle möglich, bei denen die Lagerbuchsen zweckmäßigerweise aus Kohle und die Lagerhülsen aus gehärtetem Stahl oder hartmetall-/keramikbeschichtetem Material bestehen.

Anhand mehrerer Ausführungsbeispiele wird die Erfindung näher erläutert. Die Zeichnung zeigt in Schnittdarstellungen verschiedene Ausführungen der erfindungsgemäßen Gleitlagerung. Es zeigen:
- Fig. 1: eine Magnetkupplungspumpe mit einer erfindungsgemäßen Gleitlagerung,
- Fig. 2: eine der Fig. 1 entsprechende Gleitlagerung in vergrößerter Darstellung,
- Fig. 3: eine Gleitlagerung mit zusätzlichem radialen Dehnungsausgleich für die Lagerbuchsen und Axiallagerringe sowie einer Kühlstromführung innerhalb der Gleitlagerung,
- Fig. 4: eine Gleitlagerung mit einer dem axialen Dehnungsausgleich der Lagerbuchsen und Axiallagerringe dienenden Gestaltung.

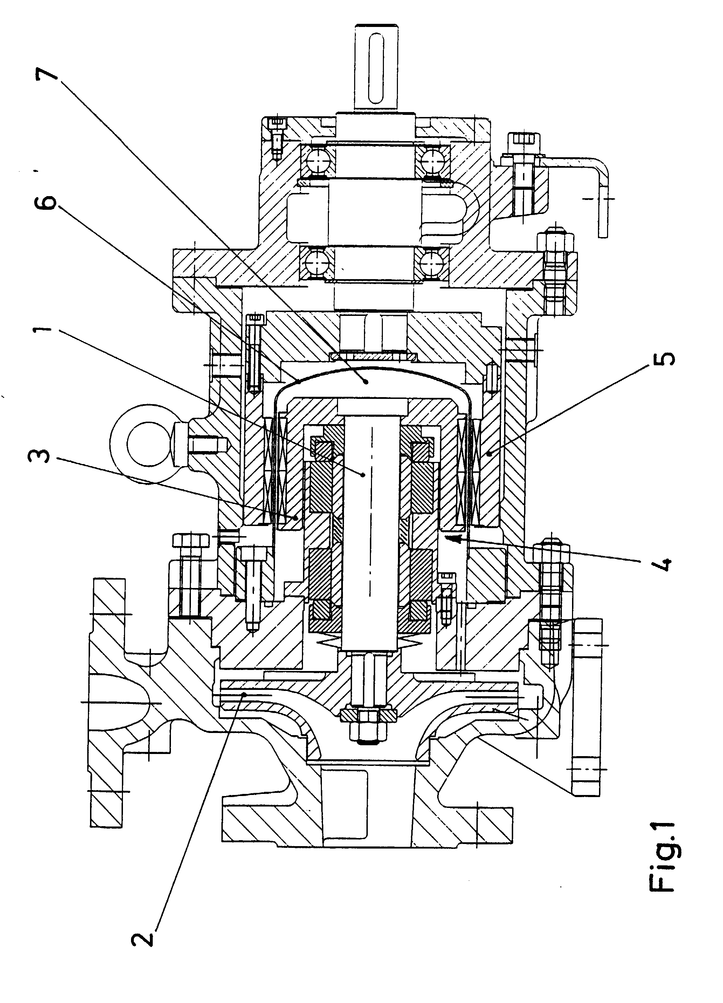

Die Fig. 1 zeigt eine Magnetkupplungspumpe mit einem auf einer Laufradwelle 1 befestigten Laufrad 2. Der Lagerung der am laufradfernen Ende einen abtriebsseitigen Magnetträger 3 tragenden Laufradwelle 1 dient eine Gleitlagerung 4. Zwischen dem abtriebsseitigen Magnetträger 3 und einem antriebsseitigen Magnetträger 5 ist ein Spalttopf 6 angeordnet, der den von ihm umschlossenen Innenraum 7 hermetisch gegenüber der Umgebung abdichtet.

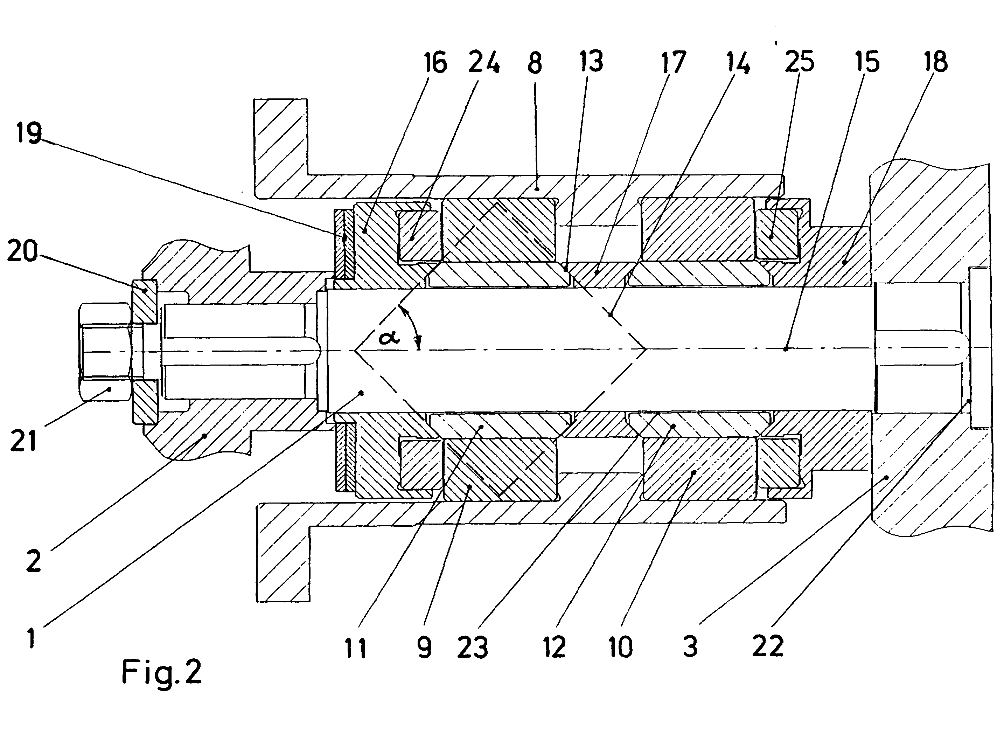

Die in der Fig. 2 vergrößert dargestellte Gleitlagerung 4 umfaßt die in einem äußeren Gehäuse 8 eingepreßten feststehenden Lagerbuchsen 9, 10 und die mit der Laufradwelle 1 rotierenden Lagerhülsen 11, 12. Zwischen den Lagerhülsen 11, 12 und der Laufradwelle 1 ist ein konstantes radiales Spiel vorgesehen, das bei sich ändernden Temperaturen unterschiedliche Durchmesserdehnungen der Lagerhülsen 11, 12 und der Laufradwelle 1 ermöglicht. Vorzugsweise werden die Lagerbuchsen 9, 10 und die Lagerhülsen 11, 12 aus keramischen Werkstoffen und die Laufradwelle 1 aus austenitischem Stahl gefertigt.

Die Lagerhülsen 11, 12 besitzen jeweils an ihren Stirnseiten radial nach außen gerichtete Konusflächen 13, d. h. jede Lagerhülse 11 oder 12 besitzt in dem dargestellten Längsschnitt an jeder Seitenfläche die Gestalt eines geraden Kreiskegelstumpfes, dessen imaginäre Spitze auf der Längsachse der Laufradwelle 1 liegt, wobei die gedachten Verbindungslinien 14 eine Raute bilden. Eine für eine einwandfreie Funktion der Gleitlagerung optimale Ausführung der Konusflächen 13 ist gegeben, wenn der zwischen einer Verbindungslinie 14 und der Wellenachse 15 gebildete Winkel α zwischen 30 ° und 60 ° beträgt.

Eine radiale und axiale Zentrierung der Lagerhülsen 11, 12 zur Gewährleistung eines konstanten Lagerspiels zwischen den Lagerhülsen 11, 12 und den Lagerbuchsen 9, 10 erfolgt durch Halteringe 16, 17, 18, die eine zu den Konusflächen 13 der Lagerhülsen 11, 12 komplementäre Gestalt besitzen und die mit einem engen Schiebesitz auf der Laufradwelle 1 zentriert sind.

Der Haltering 16 wird durch ein Federelement 19, das aus zwei Tellerfedern gebildet wird, beaufschlagt. Über das Federelement 19 wird eine Kraft in axialer Richtung ausgeübt, wozu das Federelement 19 mit Hilfe des Laufrades 2 und einer Scheibe 20 von der Laufradmutter 21 in einem Längsverbund mit den Halteringen 16, 17, 18, den Lagerhülsen 11, 12 und dem abtriebsseitigen Magnetträger 3 gegen einen Wellenbund 22 verspannt wird.

Dem Federelement 19 kommt eine für die Zentrierung und die kraftschlüssige Verbindung der im Längsverbund befindlichen Teile entscheidende Bedeutung zu. Dies gilt für den gesamten, über einen größeren Temperaturbereich ablaufenden Betrieb der Magnetkupplungspumpe. Dies gilt aber vor allem unter Berücksichtigung des Umstandes, daß die im Längsverbund befindlichen Teile unterschiedliche Wärmeausdehnungskoeffizienten besitzen.

Wird der bei Umgebungstemperatur montierte Längsverbund einer steigenden Temperatur ausgesetzt, dehnen sich die in ihm befindlichen Teile verschieden stark aus. Während die Lagerbuchsen 9, 10 und die Lagerhülsen 11, 12, die vorzugsweise aus Keramikmaterialien bestehen, nur eine relativ geringe Dehnung erfahren, werden die übrigen, aus Metall bestehenden Teile je nach dem für sie gültigen Ausdehnungskoeffizienten mehr oder weniger stark gedehnt. Durch die erfindungsgemäße Anordnung der Gleitlagerung werden aber sämtliche sich ergebenen Änderungen in den Maßverhältnissen der miteinander verbundenen Teile kompensiert:

Die im Vergleich zu den Lagerhülsen 11, 12 größere Dehnung des Durchmessers der Laufradwelle 1 wird innerhalb eines Spaltes 23 aufgenommen. Der Spalt 23 ist so bemessen, daß er die größtmögliche Durchmesserdehnung der Laufradwelle 1 innerhalb des in Frage kommenden Temperaturbereichs der Magnetkupplungspumpe zu überbrücken vermag.

Die größere Längen- und Durchmesserdehnung der metallischen Halteringe 16, 17, 18, die größere Längendehnung der Laufradwelle 1 und die geringere Längendehnung der Lagerhülsen 11, 12 würden bei einem fehlenden Längenausgleich zu Spalten an den Konusflächen 13 führen. Die durch das Federelement 19 ausgeübte, in axialer Richtung wirkende Kraft verschiebt aber die im Längsverbund befindlichen Teile gegen den Wellenbund 22. Die Axialverschiebung wird beendet, wenn die durch das Federelement 19 ausgeübte Kraft der Gegenkraft im Längsverbund der axial aneinander anliegenden Teile entspricht. Danach kann auch kein Spalt mehr innerhalb des Längsverbundes vorhanden sein.

Bei einer Absenkung der Temperatur im Innenraum 9 würden bei einem fehlenden Ausgleich die Lagerhülsen 11, 12 von den Halteringen 16, 17, 18 mit einer ansteigenden Axialkraft beaufschlagt. Da aber ein Längenausgleich über ein Zusammendrücken des Federelementes 19 erfolgt, wird auch der bei einer Temperatursenkung ablaufende Prozess kompensiert. Weil der Ausgleichsvorgang jeweils fließend und gleichzeitig mit einer Temperaturänderung abläuft, bleibt die kraftschlüssige Verbindung innerhalb des Längsverbundes und die Zentrierung der Lagerhülsen 11, 12 während des gesamten, alle Temperaturbereiche durchlaufenden Betriebs der Magnetkupplungspumpe erhalten.

Die bisher genannten und beschriebenen Merkmale dienen der radialen Positionierung der Laufradwelle 1. Die erfindungsgemäße Gleitlagerung gewährleistet darüberhinaus aber auch eine axiale Positionierung der Laufradwelle 1. Aus diesem Grund besitzen die Halteringe 16 und 18 eine nahezu bis zum äußeren Radius der Lagerbuchsen 9, 10 reichende radiale Erstreckung und tragen in einer dafür vorgesehenen Aufnahme separate Axiallagerringe 24, 25, die ebenfalls aus einem keramischen Werkstoff bestehen. Die Lagerbuchsen 9, 10 besitzen an ihren den Axiallagerringen 24, 25 zugewandten Stirnseiten Gleitflächen, so daß zwei entgegengesetzt wirkende axiale Gleitlager gebildet werden.

Die Dimensionierung der Lagerspiele zwischen den axialen Stirnflächen der Lagerbuchsen 9, 10 und der Axiallagerringe 24, 25 erfolgt in der Art, daß auch bei den maximal auftretenden Betriebstemperaturen eine problemlose Verschiebung der durch das Federelement 19 belasteten Halteringe 16, 17, 18 und der Lagerhülsen 11, 12 zum Ausgleich der temperaturbedingten Ausdehnungen gegeben ist. Diese für das einwandfreie Funktionieren des Ausgleichs notwendige Randbedingung hat zwar eine geringfügige Varianz in der axialen Position der Laufradwelle 1 zur Folge, die sich jedoch auf den Betrieb der Magnetkupplungspumpe nicht negativ auswirkt.

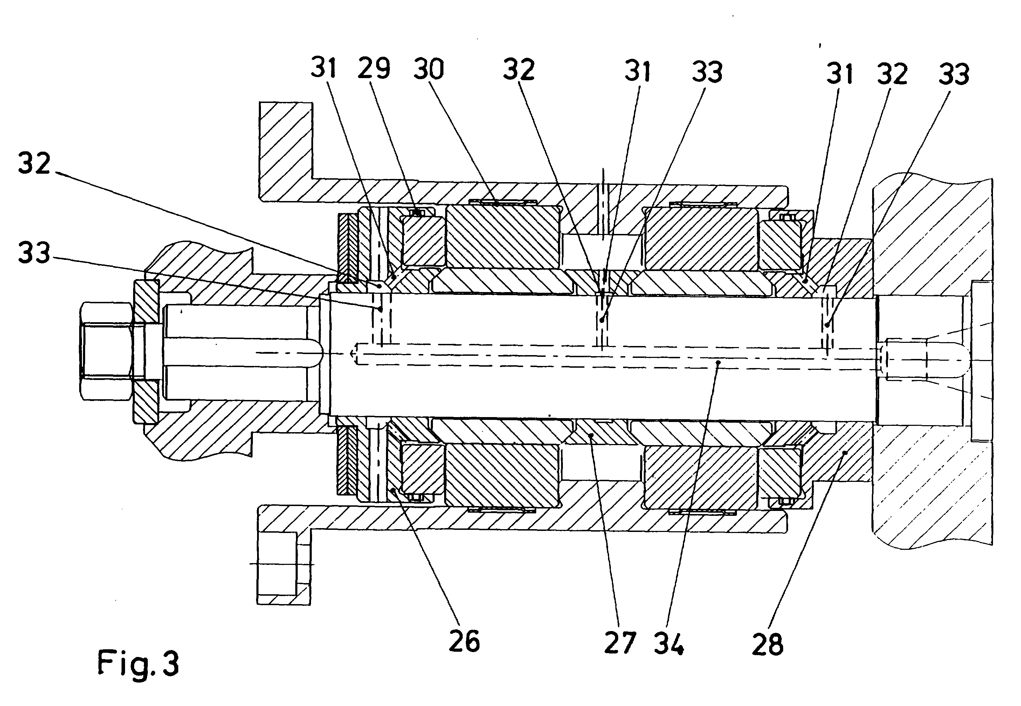

Die Fig. 3 zeigt eine im grundsätzlichen Aufbau der Fig. 2 entsprechende Gleitlageranordnung. Die Gleitlagerung der Fig. 3 ist speziell für den Einsatz bei Betriebstemperaturen über 200 °C ausgelegt. Bei derart hohen Temperaturen entstehen zwischen den Axiallagerringen 24, 25 und den Halteringen 26, 28 sowie zwischen den Lagerbuchsen 9, 10 und dem Gehäuse 8 relativ große Dehnungsdifferenzen, da die genannten Teile aus Werkstoffen mit stark unterschiedlichen Ausdehnungskoeffizienten bestehen.

Um eine kraftschlüssige Verbindung zwischen den Bauteilen allein durch eine Preßverbindung auch bei hohen Betriebstemperaturen zu gewährleisten, müßte die Preßverbindung mit entsprechend großen Übermaßen bei Raumtemperatur ausgelegt werden. Derartige Preßverbindungen überschreiten jedoch im allgemeinen die zulässige elastische Verformungsgrenze aller verwendbaren Stähle. Mit Hilfe von Federelementen, die zwischen den jeweils miteinander verbundenen Bauteilen eingesetzt werden, lassen sich aber auch größere Dehnungsdifferenzen überwinden, ohne daß sich eine Lockerung in den jeweiligen Verbindungen ergibt. So erfolgt bei der Ausführung der Fig. 3 die Befestigung der Axiallagerringe 24, 25 mit Hilfe von radial angeordneten Federelementen 29, während zur Befestigung der Lagerbuchsen 9, 10 jeweils ein radial angeordnetes Federelement 30 dient. Die Federelemente 29, 30 bestehen vorzugsweise aus Wellfedern oder Toleranzringen.

Für den sicheren Betrieb von Gleitlagerungen ist eine ausreichende Kühlung der Gleitflächen durch Zuführung eines Kühlstromes und die Vermeidung einer Ansammlung von Gasblasen an den Gleitflächen, die zum Trockenlauf und damit einem vorzeitigen Verschleiß der Gleitlagerungen führen würden, von wesentlicher Bedeutung.

In der Fig. 3 ist eine Ausführung dargestellt, die den genannten Anforderungen auch unter extremen Bedingungen zu entsprechen vermag. Die Gleitlagerung ist hierzu mit einem Kanalsystem ausgestattet, über welches ein radial einwärts gerichteter Kühlstrom geführt wird. Mit diesem Kühlstrom werden auch etwa vorhandene Gasblasen abgeführt. Die Führung des Kühlstroms erfolgt über Bohrungen 31 in den Halteringen 26, 27, 28, jeweils eine am inneren Radius eines Halteringes 26, 27, 28 umlaufende Nut 32, radiale Bohrungen 33 in der Laufradwelle 1 und eine zentrale Axialbohrung 34, die am Ende der Laufradwelle 1 mündet.

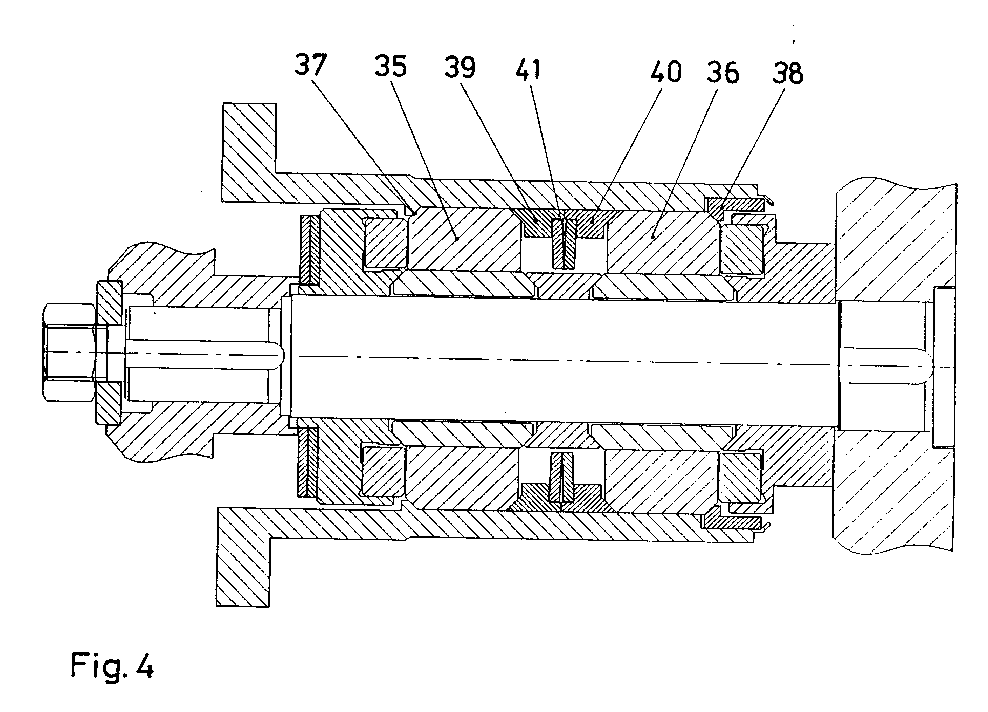

Die Fig. 4 zeigt eine weitere Möglichkeit zur Ausgestaltung der Gleitlagerung gemäß der Fig. 2 für den speziellen Einsatz bei sehr hohen Betriebstemperaturen. Diese Ausgestaltung dient einem axialen Längenausgleich zwischen dem aus Metall bestehenden Gehäuse 8 und den Lagerbuchsen 35, 36 aus einem Keramikmaterial. Die Lagerbuchsen 35, 36 sind jeweils an beiden Seitenflächen mit einer radial nach außen gerichteten Konusfläche 37 versehen, die im Prinzip analog ist zu den Konusflächen 13 der Lagerhülsen 11, 12. Die Anordnung der Lagerbuchsen 35, 36 im Gehäuse 8 erfolgt mit einem Schiebesitz, der entweder bereits während der Montage bei Raumtemperatur oder erst bei solchen Betriebstemperaturen auftritt, bei denen das Gehäuse 8 aus Stahl eine wesentlich größere Wärmedehnung aufweist als die Lagerbuchsen 35, 36.

Die Zentrierung der Lagerbuchsen 35, 36 zur Gewährleistung eines konstanten Lagerspiels zwischen diesen und den Lagerhülsen 11, 12 und die kraftschlüssige Verbindung zwischen den Lagerbuchsen und dem Gehäuse 8 bzw. einem fest in das Gehäuse eingepreßten Ring 38 mit zur Konusfläche 37 komplementärer Gestalt wird über Halteringe 39, 40 vorgenommen, die verschiebbar im Gehäuse 8 angeordnet sind und ebenfalls eine zu den Konusflächen 37 komplementäre Gestalt aufweisen. Zwischen den Halteringen 39 und 40 ist ein aus zwei Tellerfedern bestehendes Federelement 41 angeordnet, das eine beidseitig wirkende Kraft in axialer Richtung ausübt.

Durch die geschilderte Anordnung wird auch bei sehr hohen Betriebstemperaturen eine präzise Zentrierung und eine zuverlässige kraftschlüssige Verbindung über die Konusflächen 37 und die dazu komplementären Flächen der die Lagerbuchsen 35, 36 umgebenen Teile gewährleistet, obwohl stark unterschiedliche Ausdehnungskoeffizienten zwischen den einzelnen Bauteilen der Gleitlageranordnung gegeben sind. Der Ausgleich der unterschiedlichen thermischen Ausdehnungen der miteinander verbundenen Teile erfolgt in einer ähnlichen Weise wie bei dem auf der Laufradwelle 1 angeordneten Teileverbund:

Infolge der durch das Federelement 41 ausgeübten axialen Kraft werden die Halteringe 39, 40 stets unter Spannung gehalten und dann verschoben, wenn sich eine Längendifferenz zwischen den miteinander verbundenen Teilen ergibt. Somit bleibt auch hier eine kraftschlüssige, spaltfreie Verbindung erhalten. Der Ausgleich ist über einen weiten Temperaturbereich einsetzbar, er wird durch die Dimensionierung der Konusflächen 37 und des Federelements 41 definiert.

Alle Bauteile der erfindungsgemäßen Gleitlagerung sind mit Schiebesitz auf die Laufradwelle 1 bzw. in das Gehäuse 8 geschoben. Eine leichte Montage und Demontage und somit eine einfache und schnelle Reparatur sind ohne besondere Hilfsvorrichtungen möglich.

Um bei der Gleitlageranordnung gemäß Fig. 4 auch Axialkräfte in beiden Richtungen aufnehmen zu können, muß die Federkraft der Federelemente 19 und 41 so dimensioniert sein, daß die von diesen ausgeübten Kräfte stets größer sind als die zu übertragende Axialkraft.

## Patentansprüche

1. Gleitlagerung für eine Maschinenwelle, insbesondere für die Laufradwelle einer Magnetkupplungspumpe, mit zwei feststehenden Lagerbuchsen (9,10; 35,36), die jeweils an ihrem Innenumfang eine Radiallagerfläche für eine mit radialem Spiel zur Welle (1) angeordnete, an ihren Stirnseiten durch mit der Welle (1) umlaufende Elemente zentrierte Lagerhülse (11,12) besitzen, wobei die Lagerbuchsen (9,10; 35,36) außerdem auf ihrer jeweils von der anderen Lagerbuchse abgewandten Stirnseite eine Axiallagerfläche für fest mit den die Lagerhülse zentrierenden Halteringen (16,18; 26,28) verbundene Axiallagerringe (24,25) besitzen wobei die beiden außen angeordneten halteringe (16,18; 26,28) jeweils eine Erstreckung besitzen, die einen der Axiallagerringe (24,25) trägt, der mit der ihr zugewandten Stirnseite der Lagerbuchse (9,10; 35,36) zusammenwirkt, **gekennzeichnet durch** zwei Lagerhülsen (11,12), die jeweils mit einer Lagerbuchse (9,10; 35,36) ein Radiallager bilden und deren Stirnflächen als nach außen gerichtete Konusflächen (13) ausgebildet sind, wobei eine axiale und radiale Zentrierung der Lagerhülsen (11,12) durch die radial auf der Welle (1) zentrierten, axial verschieblich angeordneten Halteringe (16,17,18; 26,27,28) erfolgt, die die Konusflächen (13) jeweils mit hierzu komplementären Flächen umgreifen, und deren Erstreckungen maximal bis zum äußeren Rand der Lagerbuchsen (9,10; 35,36) reichen, und wobei die in einer Reihenschaltung auf der Welle (1) angeordneten Lagerhülsen (11,12) und Halteringe (16,17,18; 26,27,28) durch mindestens ein in axialer Richtung wirkendes Federelement (19) kraftschlüssig miteinander verbunden sind.

2. Gleitlagerung nach Anspruch 1, dadurch gekennzeichnet, daß der zur Wellenachse (15) gebildete Winkel (α) einer Konusfläche (13) zwischen 30° und 60° beträgt.

3. Gleitlagerung nach Anspruch 1, dadurch gekennzeichnet, daß zwischen den beiden Lagerhülsen (11,12) ein zentraler, beide zu den Konusflächen (13) komplementären Flächen besitzender Haltering (17; 27) angeordnet ist.

4. Gleitlagerung nach Anspruch 1, dadurch gekennzeichnet, daß die Lagerbuchsen (9,10) und die Axiallagerringe (24,25) durch radial angeordnete Federelemente (29,30) fixiert werden.

5. Gleitlagerung nach Anspruch 1, dadurch gekennzeichnet, daß die Lagerbuchsen (35,36) im Gehäuse (8) verschiebbar angeordnet sind und an jeder der beiden Stirnseiten eine radial nach außen gerichtete Konusfläche (37) aufweisen, daß die Lagerbuchsen (35,36) an den jeweils äußeren Konusflächen (37) durch das Gehäuse (8) oder ein mit dem Gehäuse (8) fest verbundenes Teil (38) und an den jeweils inneren Konusflächen (37) durch Halteringe (39,40) mit zu den Konusflächen (37) komplementären Flächen radial und axial zentriert werden, und daß zwischen den Halteringen (39,40) ein in axialer Richtung wirkendes Federelement (41) angeordnet ist.

6. Gleitlagerung für die Laufradwelle einer Magnetkupplungspumpe nach Anspruch 1, dadurch gekennzeichnet, daß in jedem Haltering (26,27,28) eine oder mehrere Bohrungen (31) angeordnet sind, welche eine Verbindung herstellen zwischen dem mit Fluid gefüllten Raum (7) im Bereich der Gleitlagerflächen und einer am inneren Radius des Halteringes (26,27,28) umlaufenden Nut (32), die ihrerseits eine oder mehrere in der Welle (1) angeordnete Bohrungen (33) umschließt, welche in eine zum Ende der Welle (1) führende Axialbohrung (34) münden.

7. Gleitlagerung nach einem der vorhergehenden Ansprüche , dadurch gekennzeichnet, daß als Federelement (19,41) eine Tellerfeder oder eine Anordnung von mehreren Tellerfedern eingesetzt wird.

8. Gleitlagerung nach einem der vorhergehenden Ansprüche , dadurch gekennzeichnet, daß die Lagerbuchsen (9,10; 35,36), die Lagerhülsen (11,12), und die Axiallagerringe (24,25) aus keramischen Werkstoffen, vorzugsweise aus Siliziumcarbid, bestehen.

9. Gleitlagerung nach einem der vorhergehenden Ansprüche , dadurch gekennzeichnet, daß die Lagerbuchsen (9,10) aus Kohle und die Lagerhülsen (11,12) aus gehärtetem Stahl oder hartmetall-/keramikbeschichtetem Stahl bestehen.

## Claims

1. Slide bearing for a machine shaft, in particular for the impeller shaft of a magnetic clutch pump, having two fixed bearing bushes (9, 10; 35, 36) which in each case have on their inner circumference a radial bearing surface for bearing sleeves (11, 12) which are arranged with radial play relative to the shaft (1) and are centred at their end faces by means of elements rotating with the shaft (1), the bearing bushes (9, 10; 35, 36) furthermore having on their end face respectively averted from the other bearing bush an axial bearing surface for axial retaining rings (24, 25) firmly connected to the retaining rings (16, 17, 18; 26, 27, 28) centring the bearing sleeve, the two retaining rings (16, 18; 26, 28) arranged on the outside in each case having an extent which bears an axial bearing ring (24, 25) which cooperates with the end face, which faces it, of the bearing bush (9, 10; 35, 36), characterized by two bearing sleeves (11, 12) which in each case form a radial bearing with a bearing bush (9, 10; 35, 36) and whose end faces are constructed as outwardly directed conical surfaces (13), an axial and radial centring of the bearing sleeves (11, 12) being performed by the retaining rings (16, 17, 18; 26, 27, 28) which are centred on the shaft (1), arranged in an axially displaceable fashion, and embrace the conical surfaces (13) in each case with surfaces complementary thereto, and whose extents reach at most up to the outer rim of the bearing bushes (9, 10; 35, 36), and the bearing sleeves (11, 12) and retaining rings (16, 17, 18; 26, 27, 28) arranged in series on the shaft (1) being interconnected in a forced-closed fashion by at least one spring element (19) acting in the axial direction.

2. Slide bearing according to Claim 1, characterized in that the angle (α), formed relative to the shaft axis (15), of a conical surface (13) is between 30° and 60°.

3. Slide bearing according to Claim 1, characterized in that a central retaining ring (17; 27) having both surfaces complementary to the conical surfaces (13) is arranged between the two bearing sleeves (11, 12).

4. Slide bearing according to Claim 1, characterized in that the bearing bushes (9, 10) and the axial retaining rings (24, 25) are fixed by means of radially arranged spring elements (29, 30).

5. Slide bearing according to Claim 1, characterized in that the bearing bushes (35,36) are arranged displaceably in the housing (8) and have on each of the two end faces a radially outwardly directed conical surface (37), in that the bearing bushes (35, 36) are centred radially and axially on the respectively outer conical surfaces (37) by means of the housing (8) or a part (38) firmly connected to the housing (8) and are centred radially and axially on the respectively inner conical surfaces (37) by means of retaining rings (39, 40) with surfaces complementary to the conical surfaces (37), and in that the spring element (41) acting in the axial direction is arranged between the retaining rings (39, 40).

6. Slide bearing for the impeller shaft of a magnetic clutch pump according to Claim 1, characterized in that arranged in each retaining ring (26, 27, 28) are one or more bores (31) which make a connection between the space (7) filled with the fluid in the region of the slide bearing surfaces and a groove (32) which runs around at the inner radius of the retaining ring (26, 27, 28) and for its part encloses one or more bores (33) which are arranged in the shaft (1) and open into an axial bore (34) leading to the end of the shaft (1).

7. Slide bearing according to one of the preceding claims, characterized in that a disc spring or an arrangement of a plurality of disc springs is/are used as spring element (19, 41).

8. Slide bearing according to one of the preceding claims, characterized in that the bearing bushes (9, 10; 35, 36), the bearing sleeves (11, 12) and the axial retaining rings (24, 25) consist of ceramic materials, preferably of silicon carbide.

9. Slide bearing according to one of the preceding claims, characterized in that the bearing bushes (9, 10) consist of carbon and the bearing sleeves (11,12) consist of hardened steel or steel coated with hard metal/ceramic.

## Revendications

1. Palier à glissement pour un arbre de machine, en particulier pour l'arbre de roue mobile d'une pompe à accouplement à aimant, avec deux coussinets fixes (9, 10; 35, 36) qui possèdent chacun, sur leur périphérie intérieure, une face de palier radiale pour une douille-palier (11, 12) disposée avec un jeu radial par rapport à l'arbre (1), centrée sur ses côtés frontaux par des éléments entourant l'arbre (1), les coussinets (9, 10; 35, 36) possédant en outre sur leur face frontale respective éloignée de l'autre coussinet une face de palier axiale pour des bagues de palier axiales (24, 25) reliées fixement aux bagues de retenue (16, 17, 18; 26, 27, 28) centrant la douille-palier, les deux bagues de retenue disposées à l'extérieur (16, 18; 26, 28) possédant chacune une étendue qui porte une bague de palier axiale (24, 25), qui coopère avec le côté frontal du coussinet (9, 10; 35, 36) qui lui fait face, **caractérisé par** deux douilles-palier (11, 12), qui forment chacune avec un coussinet (9, 10; 35, 36) un palier radial et dont les faces frontales sont conçues en tant que faces coniques (13) orientées vers l'extérieur, un centrage axial et radial des douilles-palier (11, 12) étant réalisé par les bagues de retenue (16, 17, 18; 26, 27, 28) disposées de manière déplaçable axialement et centrées radialement sur l'arbre (1), lesquelles enveloppent les faces coniques (13) à chaque fois avec des faces qui leur sont complémentaires, et dont les étendues vont au maximum jusqu'au bord extérieur des coussinets (9, 10; 35, 36), et où les douilles-palier (11, 12) et les bagues de retenue (16, 17, 18; 26, 27, 28) disposées en rangée sur l'arbre (1) sont reliées par engagement par adhérence, par au moins un élément à ressort (19) agissant dans la direction axiale.

2. Palier à glissement selon la revendication 1, caractérisé en ce que l'angle (α) d'une surface conique (13) formé avec l'axe de l'arbre (15) est compris entre 30° et 60°.

3. Palier à glissement selon la revendication 1, caractérisé en ce qu'entre les deux douilles-palier (11, 12) est disposée une bague de retenue centrale (17, 27) possèdant deux faces complémentaires aux faces coniques (13).

4. Palier à glissement selon la revendication 1, caractérisé en ce que les coussinets (9, 10) et les bagues de palier axiales (24, 25) sont fixés par des éléments à ressort (29, 30) disposés radialement.

5. Palier à glissement selon la revendication 1, caractérisé en ce que les coussinets (35, 36) sont disposés de manière déplaçable dans le carter (8) et présentent sur chacun des deux côtés frontaux une face conique (37) orientée radialement vers l'extérieur, en ce que les coussinets (35, 36) sont centrés radialement et axialement sur les faces coniques extérieures respectives (37) par le carter (8) ou une partie (38) reliée fixement au carter (8) et sur les faces coniques intérieures respectives (37) par des bagues de retenue (39, 40), avec des faces complémentaires aux faces coniques (37), et en ce qu'entre les bagues de retenue (39, 40) est disposé un élément à ressort (41) agissant dans la direction axiale.

6. Palier à glissement pour l'arbre de roue mobile d'une pompe à accouplement à aimant selon la revendication 1, caractérisé en ce que dans chaque bague de retenue (26, 27, 28) sont disposés un ou plusieurs alésages (31), qui établissent une connexion entre la chambre remplie de fluide (7) dans la zone des faces de palier à glissement et une rainure périphérique (32) sur le rayon interne de la bague de retenue (26, 27, 28), laquelle entoure à son tour un ou plusieurs alésages (33) disposés dans l'arbre (1), lesquels alésages débouchent dans un alésage axial (34) conduisant à l'extrémité de l'arbre (1).

7. Palier à glissement selon l'une quelconque des revendications précédentes, caractérisé en ce qu'on utilise en tant qu'élément à ressort (19, 41) un ressort Belleville ou un ensemble de plusieurs ressorts Belleville.

8. Palier à glissement selon l'une quelconque des revendications précédentes, caractérisé en ce que les coussinets (9, 10; 35, 36), les douilles-palier (11, 12) et les bagues de palier axiales (24, 25) se composent de matériaux céramiques, de préférence de carbure de silicium.

9. Palier à glissement selon l'une quelconque des revendications précédentes, caractérisé en ce que les coussinets (9, 10) se composent de charbon et les douilles-palier (11, 12) d'acier trempé ou d'acier enduit de métal dur/céramique.
